# EUROPÄISCHE PATENTANMELDUNG

(11) **EP 2 083 243 A2**
(43) Veröffentlichungstag der Anmeldung: **29.07.2009**
(21) Anmeldenummer: 09000202.3
(22) Anmeldetag: 09.01.2009
(51) Int. Cl.: G01B 11/26

(54) **Verfahren zur Ermittlung der Rollwinkellage eines Flugkörpers**

(30) Priorität: 22.01.2008 DE 102008005585
(71) Anmelder: Diehl BGT Defence GmbH & Co.KG, 88662 Überlingen (DE)
(72) Erfinder: Michalski, Marcin, Dr., 90552 Röthenbach (DE); Brunhuber, Werner, 91275 Auerbach (DE); Tengler, Jürgen, 90518 Altdorf (DE); Weseloh, Edgar, 90552 Röthenbach (DE)
(74) Vertreter: Diehl Patentabteilung

(57) **Zusammenfassung**

Die vorliegende Erfindung betrifft ein Verfahren zur Ermittlung der Rollwinkellage eines Flugkörpers, insbesondere eines Geschosses oder dergleichen sowie eine entsprechende Vorrichtung. Zur Lösung der erfindungsgemäßen Aufgabe ein neuartiges Verfahren sowie eine entsprechende Vorrichtung zur Ermittlung der Rollwinkellage zur Verfügung zu stellen, welche eine Ermittlung der Rollwinkellage mit vergleichsweise geringem Aufwand jedoch hoher Genauigkeit ermöglicht, die auch bei größeren Reichweiten einsetzbar sind und gegen Winkelverkippungen des Flugkörpers im Vergleich zur optischen Achse unempfindlich sind wird ein Verfahren mit folgenden Merkmalen vorgeschlagen:
Erzeugung eines bewegten Laserstrahlmusters über einen Raumwinkel α eines Laserstrahls, innerhalb dem sich der Flugkörper befindet,
Erfassung des Laserlichts am Flugkörper an einer seitlich zu dessen Rotationsachse befindlichen Erfassungsstelle,
Abgriff des Laserstrahlmusters an der jeweiligen Position der Erfassungsstelle sowie Ermittlung der momentanen Rollwinkellage auf der Grundlage von Dopplereffektbedingten Frequenzverschiebungen an der Erfassungsstelle.

## Beschreibung

Die vorliegende Erfindung betrifft ein Verfahren zur Ermittlung der Rollwinkellage eines Flugkörpers, insbesondere eines Geschosses oder dergleichen nach dem Oberbegriff des Anspruchs 1 sowie eine entsprechende Vorrichtung nach dem Oberbegriff des Anspruchs 12.

Bei der Bekämpfung sich bewegender Ziele ist neben einer optimalen Feuerleitung und geringer Flugzeit auch eine möglichst wirkungsvolle Korrektur der Flugbahn der Geschosse, vor allem bei solchen mit einer gesteigerten Reichweite, von größter Bedeutung. Durch eine wirksame Korrektur der Flugbahn wird die Trefferwahrscheinlichkeit erhöht. Bei rotierenden Flugkörpern bzw. Geschossen ist es hierzu erforderlich, auch die Rollwinkellage zu ermitteln, damit die Auslösung der Korrekturimpulse zeitrichtig erfolgen kann und eine Annäherung an die Sollflugbahn erricht werden kann.

Die Ermittlung der Rollwinkellage wurde bisher auf unterschiedliche Art und Weise durchgeführt. Aus der DE 44 16 210 C2 ist ein Verfahren sowie eine Vorrichtung zur Ermittlung der Rollwinkellage eines rotierenden Flugkörpers bekannt, bei dem die Rollwinkellage unter Verwendung eines flugkörperseitigen holographischen Elementes ermittelt wird. Bei größeren Reichweiten ist dieses Verfahren jedoch nicht oder nur noch unter Schwierigkeiten einsetzbar. Darüber hinaus ergeben sich Schwierigkeiten in der Ermittlung der Rollwinkellage im Falle einer Winkelverkippung des Flugkörpers zur optischen Achse des Leitstrahls.

Aus der DE 44 25 285 A1 ist eine Vorrichtung zur Flugbahnkorrektor von Flugkörpern bekannt, bei der zur Ermittlung der Rollwinkellage am Boden des Flugkörpers entlang des Umfangs ungleichmäßig verteilt angeordnete Spiegelelemente vorgesehen sind, die den Lichtstrahl reflektieren, so dass dieser bodenseitig empfangen und zur Ermittlung der Rollwinkellage ausgewertet werden kann. Bei dieser Vorrichtung ist somit eine bodenseitige Auswerteinstallation zwangsläufig notwendig.

Aus der US 6,483,455 B2 ist eine Vorrichtung zur Ermittlung der Rollwinkellage eines Flugkörpers vom Boden aus mittels Radar beschrieben.

Die Aufgabe der vorliegenden Erfindung besteht darin, ein neuartiges Verfahren sowie eine entsprechende Vorrichtung zur Ermittlung der Rollwinkellage zur Verfügung zu stellen, welche(s) eine Ermittlung der Rollwinkellage mit vergleichsweise geringem Aufwand jedoch hoher Genauigkeit ermöglicht, auch bei größeren Reichweiten einsetzbar ist und gegen Winkelverkippungen des Flugkörpers im Vergleich zur optischen Achse unempfindlich ist.

Bei dem gattungsgemäßen Verfahren gemäß Anspruch 1 wird die vorstehende Aufgabe durch folgende Merkmale gelöst:
Erzeugung eines bewegten Laserstrahlmusters über einen Raumwinkel α eines Laserstrahls, innerhalb dem sich der Flugkörper befindet,
Erfassung des Laserlichts am Flugkörper an einer seitlich zu dessen Rotationsachse befindlichen Erfassungsstelle,
Abgriff des Laserstrahlmusters an der jeweiligen Position der Erfassungsstelle sowie Ermittlung der momentanen Rollwinkellage auf der Grundlage von Dopplereffekt-bedingten Frequenzverschiebungen an der Erfassungsstelle.

Durch die Verwendung des Laserstrahlmusters kann die Rollwinkellage eindeutig bestimmt werden. Die vorzunehmende Signalverarbeitung sowie Signalauswertung ist technisch einfach und demzufolge kostengünstig zu realisieren. Aufwendige Installationen werden nicht benötigt. Das Verfahren ermöglicht es, neben der Rollwinkellage zudem auch die Ablage des Flugkörpers zu bestimmen. Zudem erlaubt das erfindungsgemäße Verfahren die Ermittlung der Radialgeschwindigkeit zur optischen Achse.

Gemäß einer zweckmäßigen Ausgestaltung des erfindungsgemäßen Verfahrens wird ein Laserstrahlmuster durch in gleichem Abstand zueinander angeordneter Streifen (Streifenmuster) erzeugt, die sich mit einer vorgegebenen Frequenz über den Raumwinkel α des Laserleitstrahls in vorgegebener Richtung bewegen. Die Richtung des Leitstrahls bleibt hierbei zweckmäßigerweise konstant.

Vorzugsweise sind die Streifen geradlinig ausgebildet. Bei einem sich drehenden Flugkörper ergibt sich hierdurch eine am Detektor erfasste Signalform mit abwechselnden Perioden höherer und niedrigerer Frequenzen, die einer einfachen Signalauswertung zuführbar sind.

In einer alternativen Ausgestaltung der vorliegenden Erfindung sind die Streifen kreisförmig und bewegen sich radial, beispielsweise vom Mittelpunkt radial nach außen. Bei dieser Ausgestaltung ist es möglich, zusätzlich die seitliche Ablage des Flugkörpers zur optischen Achse des Leitstrahls zu bestimmen, wodurch ein zusätzlicher Aufwand zur Bestimmung der Ablage gegenüber der gewünschten Flugbahn entfällt.

Die durch das Laserstrahlmuster erzeugte Signalform kann mit einfachen Signal verarbeitenden Mitteln in ein Frequenz demoduliertes Signal transformiert werden, anhand dem Positionsfestlegungen für die Erfassung der Rollwinkellage in einfacher Weise vorgenommen werden können. Beispielsweise kann mit Hilfe des Frequenz demodulierten Signals dessen Nullpunktdurchgang zur Identifizierung der exakten Rollwinkellage des Flugkörpers herangezogen werden.

Das Verfahren erlaubt es zudem, die Rollwinkellage mehrerer sich im Laserleitstrahl befindlicher Flugkörper gleichzeitig zu ermitteln und somit Flugbahnkorrekturen mehrerer Flugkörper unabhängig voneinander durchzuführen.

Zudem kann auch die Geschwindigkeitskomponente des Flugkörpers in Radialrichtung Vᵣ zur optischen Achse des Laserleitstrahls ermittelt und der Steuerung der Flugbahnkorrektur als Variable zugeführt werden.

Zweckmäßigerweise wird die Geschwindigkeitskomponente Vᵣ aus dem Unterschied der ermittelten mittleren Frequenz ω des Flugkörpers in der Rotationsachse und der Frequenz auf der optischen Achse ω₀ bestimmt.

Ferner ist es vorteilhaft, wenn die Geschwindigkeit der Streifen V_{S} um einen Faktor von mindestens 15, vorzugsweise um mindestens einen Faktor 30 größer ist als die Drehgeschwindigkeit V_{D} der Erfassungsstelle, d. h. des Detektors oder einer entsprechenden Detektorapertur. Hierdurch kann eine besonders gute Funktion des Verfahrens sichergestellt werden.

Darüber hinaus ist der Streifenabstand h zweckmäßigerweise größer als die wirksame Fläche der Empfangsstelle, d. h. des Detektors oder einer entsprechenden Detektorapertur.

Die vorliegende Erfindung betrifft des Weiteren eine Vorrichtung zur Ermittlung der Rollwinkellage nach dem Oberbegriff des Anspruchs 12, insbesondere zur Durchführung des Verfahrens nach einem der Ansprüche 1-11. Die Vorrichtung ist dadurch gekennzeichnet, dass
der Laserleitstrahl einen Raumwinkel α bildet,
der Laserleitstrahl über den Raumwinkel α ein festgelegtes Leitstrahlmuster bildet, mit dem der Flugkörper beaufschlagbar ist,
ein flugkörperseitiger Detektor vorgesehen ist, der dazu dient, das vom Lasersystem erzeugte Laserlicht zu empfangen und einer flugkörperseitigen Auswerteeinheit zuzuführen,
der Detektor sich seitlich versetzt zur Rotationsachse des Flugkörpers befindet sowie
eine Einrichtung zur Ermittlung der Lage des Flugkörpers auf der Grundlage einer am Detektor erfassten, Dopplereffekt-bedingten Frequenzverschiebung vorgesehen ist.

Die erfindungsgemäße Vorrichtung macht es möglich, die Rollwinkellage mit vergleichsweise geringem Bauteileaufwand ohne der Notwendigkeit der Ermittlung der Rollwinkellage vom Boden aus in einfacher Weise mit hoher Genauigkeit durchzuführen. Zudem kann auch die Ablage sowie die Radialgeschwindigkeit des Flugkörpers zur optischen Achse ermittelt werden. Die Vorrichtung ist zudem auch geeignet, bei größeren Reichweiten eingesetzt zu werden und die Ermittlung der Rollwinkellage mehrerer Flugkörper im Laserleitstrahl gleichzeitig vorzunehmen.

Zweckmäßigerweise handelt es sich bei dem Laserstrahlmuster um ein geradliniges Laserstrahlmuster, bei dem die Streifen in identischem Abstand zueinander liegen und das Streifenmuster sich in einer vorgegebenen Richtung mit einer vorgegebenen Frequenz ω₀ über den Laserleitstrahl bewegt.

Alternativ ist ein kreisförmiges Streifenmuster vorgesehen, dessen Streifen vorzugsweise ebenfalls in gleichem Abstand zueinander angeordnet sind. Das Streifenmuster bewegt sich von dem Mittelpunkt des Laserleitstrahls (optische Achse) radial mit einer vorgegebenen Frequenz wo nach innen oder nach außen.

Die Vorrichtung umfasst des Weiteren zweckmäßigerweise Mittel einen zur Signalweiterverarbeitung beispielsweise einen sog. Frequenzdemodulator.

Zur Erzeugung des Laserstrahlmusters sind im Lasersystem Mittel zur Erzeugung einer kohärenten Überlagerung zweier Kugelwellen vorgesehen, wodurch durch Interferenz ein Streifenmuster erzeugt werden kann. Die Bewegung des Streifenmusters erfolgt beispielsweise durch Veränderung der Lage der Strahlerzeugung einer der beiden Kugelwellen.

Beispielsweise kann die Vorrichtung als Mittel zur Erzeugung einer kohärenten Überlagerung einen Strahlteiler, einen Retroreflektor sowie zwei Blenden umfassen, die zur Erzeugung der zu überlagernden Kugelwellen dienen.

Zur Erzeugung eines kreisförmigen Streifenmusters können Mittel zum Überlagern von zwei koaxial zu sendenden Kugelwellen mit verschiedenen Krümmungsradien vorgesehen sein.

Zweckmäßige Ausgestaltungen der vorliegenden Erfindung werden anhand der Zeichnungen nachstehend im Einzelnen erläutert. Es zeigen:
- Fig. 1: eine stark vereinfachte schematische Darstellungsweise einer ersten Ausgestaltung der Erfindung;
- Fig. 2: eine stark vereinfachte schematische Darstellungsweise der die Ermittlung der Rollwinkellage betreffenden wesentlichen Komponenten des Flugkörpers;
- Fig.3: eine schematische Darstellung des Prinzips der Ermittlung der Rollwinkellage unter Anwendung eines sich bewegenden, geradlinigen Streifenmusters gemäß der ersten Ausgestaltung der Erfindung;
- Fig. 4: eine Gegenüberstellung zweier unterschiedlicher Rollwinkellagen bei der ersten Ausgestaltung der Erfindung;
- Fig. 5: die Darstellung des Detektorsignals bei der Durchführung des Verfahrens gemäß der ersten Ausgestaltung sowie des aus dem Detektorsignal erzeugten Frequenz-demodulierten Signals;
- Fig. 6: eine zweite Ausgestaltung der vorliegenden Erfindung unter Verwendung eines kreisförmigen Streifenmusters;
- Fig. 7: eine prinzipielle Darstellung der Ausgestaltung der Erfindung nach den Figuren 1-5 in Zusammenhang mit der Ermittlung der Radialgeschwindigkeit des Flugkörpers sowie
- Fig. 8: eine stark vereinfachte schematische Darstellung eines Beispiels eines Lasersystems zur Erzeugung eines sich bewegenden geradlinigen Streifenmusters.

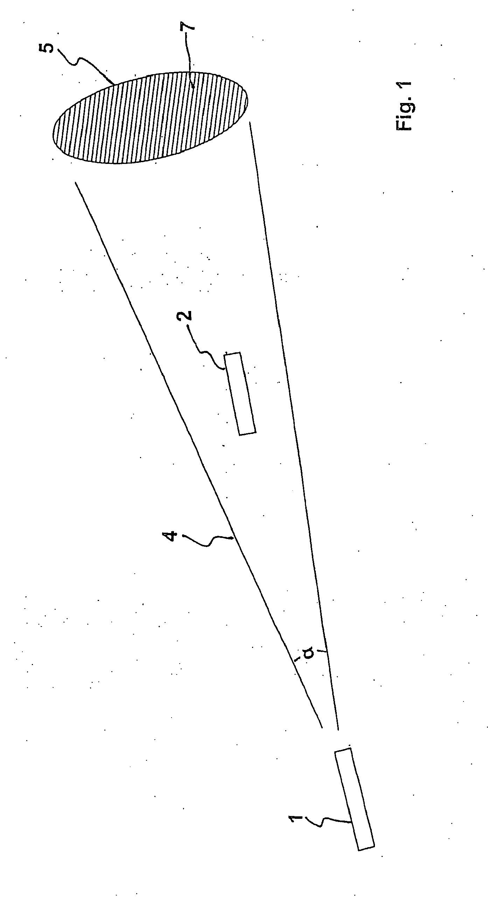

Fig. 1 zeigt eine erste Ausgestaltung der vorliegenden Erfindung. Bezugsziffer 1 bezeichnet ein am Boden, vorzugsweise an der Abschussstelle des Flugkörpers befindliches Lasersystem zur Erzeugung eines Laserleitstrahls 4, welches einen Raumausschnitt mit einem Raumwinkel α ausleuchtet. Der Laserleitstrahl 4 dient dazu, den mit Bezugsziffer 2 gekennzeichneten Flugkörper auf der gewünschten Flugbahn zu halten. Der Flugkörper 2 hat einen Eigendrall und dreht sich daher mit einer bestimmten Drehgeschwindigkeit um seine eigene Achse; das Lasersystem beleuchtet den Flugkörper 2 und die Umgebung mit parallelen Streifenmustem, die sich in einer vorgegebenen Richtung, beispielsweise in Fig.1 nach oben, bewegen. Die Leitstrahlrichtung kann hierbei konstant bleiben muss es aber nicht.

Auf der in Fig. 1 rechts dargestellten Seite des Leitstrahls 4 ist eine gedachte Schnittfläche des Leitstrahls 4 dargestellt, die ein geradliniges Streifenmuster 5 aus raum- und zeitmodulierten Laserstrahlen zeigt. Die einzelnen Streifen sind mit 7 gekennzeichnet. Das geradlinige Streifenmuster 5 wird über die Raumwinkelerstreckung des Leitstrahls 4 erzeugt.

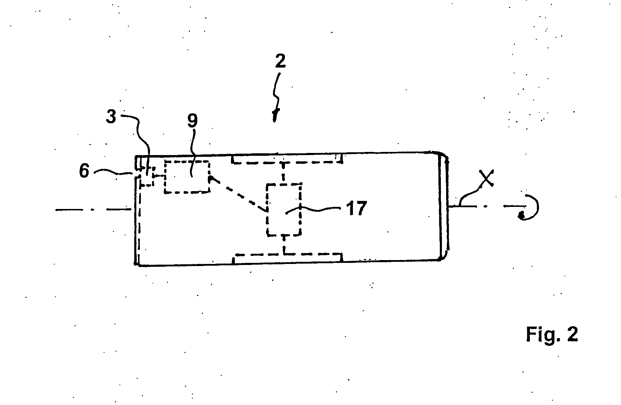

Die Einrichtung zur Ermittlung der Rollwinkellage des Flugkörpers 2 ist gemäß Fig. 2 ausschließlich flugkörperseitig. Der Flugkörper umfasst an seinem unterseitigen Bereich einen lichtempfindlichen Detektor 3, der mit Mitteln 9 zur Signalweiterverarbeitung in Verbindung steht. Die Mittel 9 zur Signalweiterverarbeitung umfassen insbesondere Mittel zur Frequenz-Demodulierung des Detektorsignals sowie einen Mikroprozessor zur Weiterverarbeitung des Frequenz-demodulierten Signals. Bezugsziffer 17 steht für (lediglich schematisch dargestellte) Mittel zur Flugbahnbeeinflussung, die aktiviert werden, sobald der Flugkörper von seiner gewünschten Flugbahn abgekommen ist bzw. die Flugbahn wegen einer Ortsveränderung des Zielobjektes geändert werden muss. Die Beeinträchtigung der Flugbahn kann auf unterschiedliche Art und Weise erfolgen. X kennzeichnet die Rotationsachse des Flugkörpers 2.

Der Detektor 3 ist an der Unterseite d. h. am Boden des Flugkörpers 2 seitlich versetzt zur Rotationsachse des Flugkörpers 2 positioniert und von außen aufgrund einer Detektorapertur 6 in der Abdeckung zugänglich.

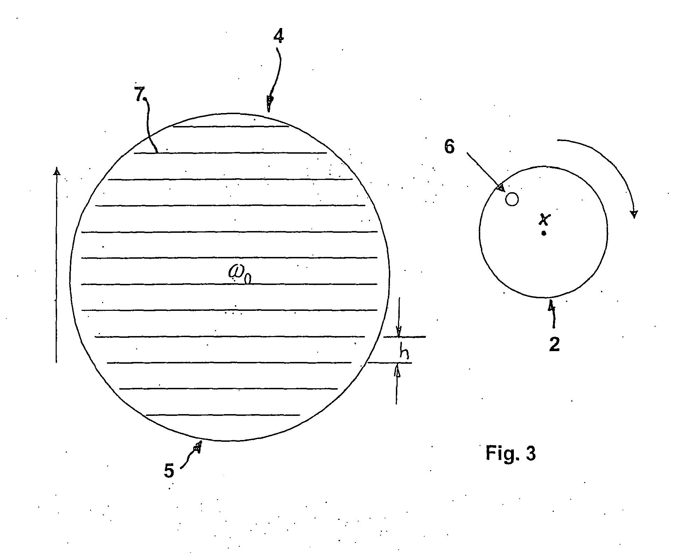

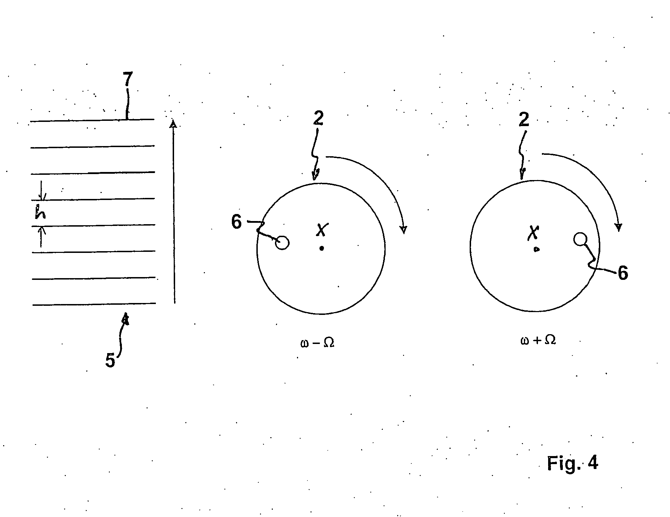

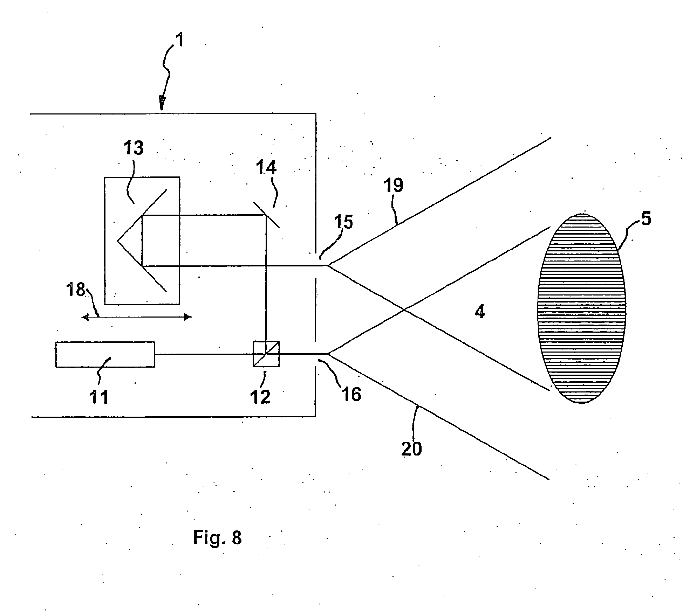

Die Figuren 3 und 4 erläutern das Messprinzip der vorliegenden Erfindung. Das geradlinige Streifenmuster 5 in Fig. 3 umfasst einzelne in einem konstanten Abstand h zueinander angeordnete, geradlinige Streifen 7 erhöhter Lichtintensität. Das geradlinige Streifenmuster 5 bewegt sich von der Unterseite in Fig. 8 nach oben mit einer fest vorgegebenen Geschwindigkeit. An der optischen Achse des Leitstrahls 4 schwankt die Lichtintensität mit einer Frequenz ω₀, wie dies auf der linken Seite in Fig. 3 gezeigt ist.

Die Detektorapertur 6 befindet sich seitlich versetzt zur Rotationsachse X des Flugkörpers 2. Der in Fig. 3 rechts dargestellte Pfeil zeigt die Rotationsrichtung des Flugkörpers 2.

Wie in Fig. 4 dargestellt hängt die Frequenz von Lichtintensitätsschwankungen am Detektor 3 aufgrund des sich bewegenden, geradlinigen Streifenmusters 5 von der Rollwinkellage des Flugkörpers 2 ab. Die Frequenz variiert zwischen w - Ω und ω + Ω (vgl. Fig. 4, mittlere Darstellung sowie rechte Darstellung). ω steht hier für die zentrale Frequenz, gemessen an der Rotationsachse X des Flugkörpers 2. Ω repräsentiert die Frequenzverschiebung, welche abhängig von der Drehfrequenz des Geschosses um seine Längsachse, sowie von dem Streifenabstand h und von der zentralen Frequenz w und dem radialen Abstand des Detektors 6 ist. Die Frequenzverschiebung Ω findet aufgrund des Dopplereffekts statt. Die Frequenz ω kann sich von der Frequenz ω₀ unterscheiden.

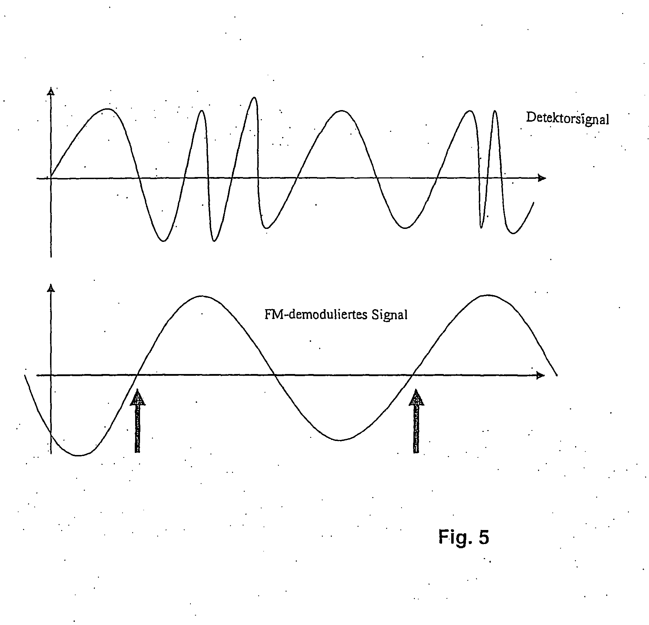

Die Form des unmittelbar vom Detektor 3 erfassten Signals ergibt sich aus Fig. 5, obere Darstellung. Aufgrund des geradlinigen Streifenmusters 5 und des sich drehenden Flugkörpers ergeben sich abwechselnd Perioden mit höheren sowie niedrigeren Frequenzen. Die Perioden mit niedrigerer Frequenz entsprechen der in der Mitte der Fig. 4 dargestellten Drehsituation (ω-Ω) des Flugkörpers 2, da sich die seitlich befindliche Detektorapertur 6 mit dem geradlinigen Streifenmuster mitbewegt. Die rechte Darstellung (ω+ Ω) des Flugkörpers 2 in Fig. 4 entspricht der Situation mit größerer Frequenz, da sich die Detektorapertur 6 entgegen der Bewegungsrichtung des geradlinigen Streifenmusters 5 bewegt. Die vom Detektor 3 erfasste Frequenz ist somit rollwinkellageabhängig.

Es ist zweckmäßig, den Detektor 3 möglichst weit von der Rotationsachse des Flugkörpers 2 zu platzieren. Beispielsweise ist bei einem 40 mm Geschoss ein Detektorabstand von R = 1,5 cm realistisch. Bei diesem Abstand und einer Drehfrequenz von V_{F} = 300 U/s beträgt die Detektorgeschwindigkeit V_{D} = 2 πr V_{F} ca. 30 m/s. Die Streifenmustergeschwindigkeit V_{S} ist deutlich höher, beispielsweise um mindestens einen Faktor 15, vorzugsweise um einen Faktor 30.

Ebenso ist der Streifenabstand h größer als die Detektorapertur 6. Aus Streifenabstand h = 10 cm, Laserwellenlänge λ = 1 µm und der Flugkörperentfernung (z. B. 1 km) ergibt sich die minimale Lasersystemapertur d = λR/h= 1 cm. Die Lasersystemapertur kann mit wachsendem Streifenabstand weiter verringert werden.

Aus dem Streifenabstand h und der Streifenmustergeschwindigkeit V_{S} (z. B. 1 km/s) ergibt sich die Lichtintensitätsfrequenz auf der optischen Achse ω₀ = V_{S} / h = 10 kHz. Die Frequenzverschiebung Ω kann mittels Dopplereffekt bestimmt werden. Ω = ω₀ V_{D} /V_{S} = 300 Hz.

Die Frequenzdifferenz zwischen den Frequenzen an Leitstrahl und Flugkörperrotationsachse Δω = ω - ω₀, wobei ω die zentrale Frequenz gemessen an der Rotationsachse X des Flugkörpers ist, kann auch mittels Dopplereffekt bestimmt werden. Bei einer Radialgeschwindigkeit von Vᵣ = 1 m/s beträgt die Frequenzdifferenz Δω = ω₀ Vᵣ/Vₛ = 10 Hz.

Das aus Fig. 5 oben ersichtliche Detektorsignal kann mit einfachen technischen Mitteln, beispielsweise mit einem in den Mitteln 9 zur Signalweiterverarbeitung (Fig. 2) befindlichen Frequenz-Demodulator in ein Frequenz-demoduliertes Signal umgewandelt werden, welches in Fig. 5 unten dargestellt ist. Die mit Pfeilen gekennzeichneten Nulldurchgänge des Frequenz-demodulierten Signals markieren die Zeiten, wo die Rollwinkellage der Lage entspricht, bei der sich der Detektor 3 an der Oberseite befindet. Somit ist eine eindeutige Zuordnung der Detektorposition möglich.

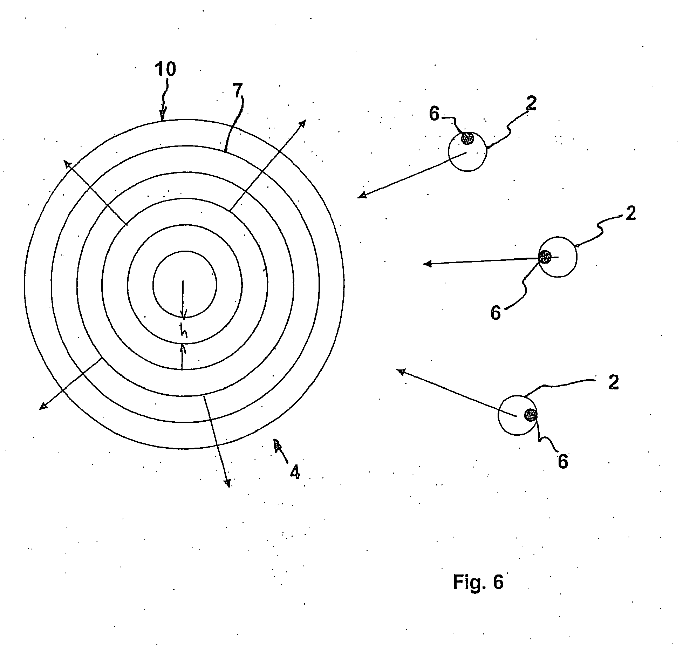

Fig. 6 zeigt eine alternative Ausgestaltung der vorliegenden Erfindung. Anstatt eines geradlinigen Streifenmusters wird bei dieser Ausgestaltung ein kreisförmiges Streifenmuster 10 eingesetzt, welches sich ebenfalls bewegt. Das Streifenmuster, bestehend aus einzelnen kreisförmigen mit einem Abstand h zueinander angeordneten Streifen 7. Das Streifenmuster 10 bewegt sich hierbei von dem Mittelpunkt des Leitstrahls 4 radial nach außen. Diese Ausgestaltung bietet den Vorteil, dass zusätzlich zur Rollwinkellage des Flugkörpers 2 die seitliche Ablage, also der Position des Flugkörpers 2 zur optischen Achse des Leitstrahls 4, bestimmt werden kann. Weitere Maßnahmen zur Ermittlung der Ablage können daher entfallen.

In Fig. 6 sind mehrere Flugkörper 2 dargestellt, die aufgrund des kreisförmigen Musters hinsichtlich deren Ablage sowie ihrer Rollwinkellage eine Korrektur eigenständig vornehmen können.

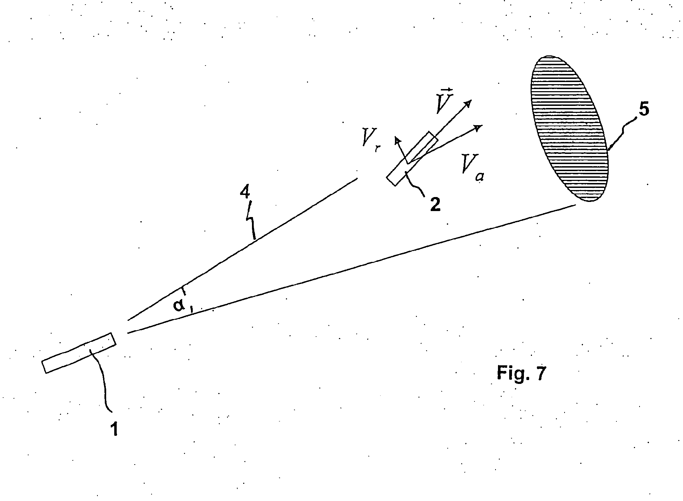

Fig.7 zeigt die Darstellung gemäß Fig. 1 mit zusätzlicher Angabe verschiedener Geschwindigkeitskomponenten des Flugkörpers nämlich der Geschwindigkeitskomponente in Radialrichtung Vᵣ, derjenigen in Richtung der Rotationsachse des Flugkörpers 2 sowie der Geschwindigkeitskomponente Vₐ aus der Zielvorgabe. Die Differenz zwischen den Frequenzen ω und ω₀ ist von der Geschwindigkeitskomponente in Radialrichtung Vᵣ abhängig. Sie kann für die Flugbahnkorrektur als zusätzliche Variable eingesetzt werden.

Fig. 8 zeigt ein Beispiel der Möglichkeit der Erzeugung des bewegten geradlinigen Streifenmusters 5. Bezugsziffer 11 kennzeichnet einen Laser, dessen Licht über einen Strahlteiler 12, einen Umlenkspiegel 14 sowie einen Retroreflektor 13 in zwei kohärente Laserlichtstrahlen 2 geteilt wird und parallel angeordneten Blenden 15, 16 des Lasersystems 1 zugeführt wird. An den Blenden 15, 16 werden zwei Kugelwellen erzeugt, die sich überlagern und aufgrund Interferenzbildung ein geradliniges Streifenmuster bilden.

Die Bewegung des geradlinigen Streifenmusters 5 wird durch Mittel 18 zur Positionsveränderung des Retroreflektors 13 gewährleistet, die den Retroreflektor 13 mit einer Geschwindigkeit von beispielsweise 0,5 cm/s nach vorne, d. h. in Richtung zu der Blende 15, bewegen und ihn anschließend schnell zurückziehen, um den Bewegungsablauf wieder von vorne beginnen zu lassen.

Zur Erzeugung eines kreisförmigen Streifenmusters 10 gemäß Fig. 6 können beispielsweise zwei koaxial gesendete Kugelwellen mit verschiedenen Krümmungsradien überlagert werden.

Beispielsweise kann ein Verfahren zur Ermittlung der Rollwinkellage eines Flugkörpers wie folgt vorgesehen sein:
1) Verfahren zur Ermittlung der Rollwinkellage eines Flugkörpers, insbesondere eines Geschosses oder dergleichen gekennzeichnet durch folgende Verfahrensschritte: Erzeugung eines bewegten Laserstrahlmusters über einen Raumwinkel α eines Laserstrahls, innerhalb dem sich der Flugkörper befindet, Erfassung des Laserlichts am Flugkörper an einer seitlich zu dessen Rotationsachse befindlichen Erfassungsstelle, Abgriff des Laserstrahlmusters an der jeweiligen Position der Erfassungsstelle sowie Ermittlung der momentanen Rollwinkellage auf der Grundlage von Dopplereffekt-bedingten Frequenzverschiebungen an der Erfassungsstelle.
2) Verfahren wie in 1), dadurch gekennzeichnet, dass das Laserstrahlmuster durch Streifen erzeugt wird, die sich mit einer vorgegebenen Frequenz über den Raumwinkel α des Laserleitstrahls bewegen.
3) Verfahren wie in 2), dadurch gekennzeichnet, dass die Streifen geradlinig sind und sich quer zur Längserstreckung der Streifen bewegen.
4) Verfahren wie in 2), dadurch gekennzeichnet, dass die Streifen kreisförmig sind und sich radial bewegen.
5) Verfahren wie in 2), dadurch gekennzeichnet, dass die Streifen radial ausgebildet sind und sich kreisförmig bewegen.
6) Verfahren wie in 4) oder 5), dadurch gekennzeichnet, dass zusätzlich die seitliche Ablage des Flugkörpers zur optischen Achse des Leitstrahls ermittelt wird.
7) Verfahren wie in 1) bis 6), dadurch gekennzeichnet, dass aus der erfassten Signalform ein Frequenz-demoduliertes Signal erzeugt wird, anhand dessen Positionsfestlegungen für die Erfassung der Rollwinkellage vorgenommen werden.
8) Verfahren wie in 1) bis 7), dadurch gekennzeichnet, dass das Verfahren zur Ermittlung der Rollwinkellage mehrerer Flugkörper gleichzeitig eingesetzt wird.
9) Verfahren wie in 1) bis 8), dadurch gekennzeichnet, dass die Geschwindigkeitskomponente in Radialrichtung Vᵣ ermittelt wird.
10) Verfahren wie in 9), dadurch gekennzeichnet, dass die Geschwindigkeitskomponente Vᵣ aus dem Unterschied der ermittelten mittleren Frequenz w des Flugkörpers in der Rotationsachse und der Frequenz auf der optischen Achse ω₀ bestimmt wird.
11) Verfahren wie in 1) bis 10), dadurch gekennzeichnet, dass die Geschwindigkeit der Streifen Vₛ mindestens um einen Faktor 15, vorzugsweise um einen Faktor 30 größer ist als die Drehgeschwindigkeit V_{D} der Erfassungsstelle.
12) Verfahren wie in 1) bis 11), dadurch gekennzeichnet, dass der Streifenabstand h größer als die wirksame Fläche der Erfassungsstelle ist.

Gemäß einem weiteren Beispiel kann eine Vorrichtung zur Ermittlung der Rollwinkellage eines Flugkörpers, insbesondere eines Geschosses wie folgt vorgesehen sein:
13) Vorrichtung zur Ermittlung der Rollwinkellage eines Flugkörpers, insbesondere eines Geschosses oder dergleichen unter Einsatz eines Lasersystems zur Erzeugung eines Laserleitstrahls sowie eines optischen Detektors zur Ermittlung der Lage des Flugkörpers und zur Gewinnung eines Korrektursignals, insbesondere zur Durchführung des Verfahrens nach einem der vorhergehenden Verfahrensansprüche, dadurch gekennzeichnet, dass der Laserleitstrahl (4) einen Raumwinkel α bildet, der Laserleitstrahl (4) über den Raumwinkel α ein festgelegtes Laserstrahlmuster bildet, mit dem der Flugkörper (4) beleuchtbar ist, ein flugkörperseitiger Detektor (3) vorgesehen ist, der dazu dient, das vom Lasersystem (1) erzeugte Laserlicht zu empfangen und einer flugkörperseitigen Auswerteeinheit zuzuführen, der Detektor (3) sich zur Rotationsachse X des Flugkörpers (2) seitlich versetzt befindet, sowie eine Einrichtung zur Ermittlung der Lage des Flugkörpers (2) auf der Grundlage einer am Detektor (3) erfassten, Dopplereffekt-bedingten Frequenzverschiebung vorgesehen ist.
14) Vorrichtung wie in 13), dadurch gekennzeichnet, dass es sich bei dem Laserstrahlmuster um ein geradliniges Streifenmuster (5) handelt.
15) Vorrichtung wie in 13), dadurch gekennzeichnet, dass es sich bei dem Laserstrahlmuster um ein kreisförmiges Streifenmuster (10) handelt.
16) Vorrichtung wie in 13), dadurch gekennzeichnet, dass es sich bei dem Laserstrahlmuster um ein radiales Streifenmuster handelt.
17) Vorrichtung wie in 13) bis 16), dadurch gekennzeichnet, dass sich der Detektor (3) am Boden oder im Bodenbereich des Flugkörpers (2) befindet.
18) Vorrichtung wie in 13) bis 17), dadurch gekennzeichnet, dass im Flugkörper (2) Mittel (9) zur Signalweiterverarbeitung vorgesehen sind.
19) Vorrichtung wie in 18), dadurch gekennzeichnet, dass als Einrichtung zur Signalweiterverarbeitung ein Frequenzdemodulator vorgesehen ist, der die vom Detektor (3) erfassten Signale zur weiteren Auswertung demoduliert.
20) Vorrichtung wie in 13) bis 19), dadurch gekennzeichnet, dass sich das Laserstrahlmuster mit einer vorgegebenen Frequenz ω₀ über die optische Achse des Leitstrahls (4) bewegt.
21) Vorrichtung wie in 13) bis 20), dadurch gekennzeichnet, dass das Lasersystem (1) zur Erzeugung von parallelen oder kreisförmigen Streifenmustern Mittel zur Erzeugung einer kohärenten Überlagerung zweier Kugelwellen umfasst.
22) Vorrichtung wie in 21), dadurch gekennzeichnet, dass ein Teilstrahl zur Erzeugung einer der beiden Kugelwellen in seiner Länge veränderbar ist.
23) Vorrichtung wie in 21), dadurch gekennzeichnet, dass Mittel zum Überlagern von zwei koaxial zu sendenden Kugelwellen mit verschiedenen Krümmungsradien vorgesehen sind.

### BEZUGSZEICHENLISTE

- 1: Lasersystem
- 2: Flugkörper
- 3: Detektor
- 4: Leitstrahl
- 5: Geradliniges Streifenmuster
- 6: Detektorapertur
- 7: Streifen
- 8: Rotationsachse von Fugkörpern
- 9: Mittel zur Signalweiterverarbeitung
- 10: Kreisförmiges Streifenmuster
- 11: Laser
- 12: Strahlteiler
- 13: Retroreflektor
- 14: Spiegel
- 15: Blende
- 16: Blende
- 17: Mittel zur Flugbahnbeeinflussung
- 18: Mittel zur Positionsveränderung des Retroreflektors
- 19: Kugelwelle
- 20: Kugelwelle

## Patentansprüche

1. Verfahren zur Ermittlung der Rollwinkellage eines Flugkörpers, insbesondere eines Geschosses oder dergleichen
**gekennzeichnet durch** folgende Verfahrensschritte:
Erzeugung eines bewegten Laserstrahlmusters über einen Raumwinkel α eines Laserstrahls, innerhalb dem sich der Flugkörper befindet,
Erfassung des Laserlichts am Flugkörper an einer seitlich zu dessen Rotationsachse befindlichen Erfassungsstelle,
Abgriff des Laserstrahlmusters an der jeweiligen Position der Erfassungsstelle sowie
Ermittlung der momentanen Rollwinkellage auf der Grundlage von Dopplereffekt-bedingten Frequenzverschiebungen an der Erfassungsstelle.

2. Verfahren nach Anspruch 1,
**dadurch gekennzeichnet,**
**dass** das Laserstrahlmuster durch Streifen erzeugt wird, die sich mit einer vorgegebenen Frequenz über den Raumwinkel α des Laserleitstrahls bewegen.

3. Verfahren nach Anspruch 2,
**dadurch gekennzeichnet,**
**dass** die Streifen geradlinig sind und sich quer zur Längserstreckung der Streifen bewegen.

4. Verfahren nach Anspruch 2,
**dadurch gekennzeichnet,**
**dass** die Streifen kreisförmig sind und sich radial bewegen.

5. Verfahren nach Anspruch 2,
**dadurch gekennzeichnet,**
**dass** die Streifen radial ausgebildet sind und sich kreisförmig bewegen.

6. Verfahren nach einem der vorhergehenden Ansprüche,
**dadurch gekennzeichnet,**
**dass** aus der erfassten Signalform ein Frequenz-demoduliertes Signal erzeugt wird, anhand dessen Positionsfestlegungen für die Erfassung der Rollwinkellage vorgenommen werden.

7. Verfahren nach einem der vorhergehenden Ansprüche,
**dadurch gekennzeichnet,**
**dass** die Geschwindigkeitskomponente in Radialrichtung Vᵣ ermittelt wird.

8. Verfahren nach Anspruch 7,
**dadurch gekennzeichnet,**
**dass** die Geschwindigkeitskomponente Vᵣ aus dem Unterschied der ermittelten mittleren Frequenz w des Flugkörpers in der Rotationsachse und der Frequenz auf der optischen Achse ω₀ bestimmt wird.

9. Verfahren nach einem der vorhergehenden Ansprüche,
**dadurch gekennzeichnet,**
**dass** die Geschwindigkeit der Streifen Vₛ mindestens um einen Faktor 15, vorzugsweise um einen Faktor 30 größer ist als die Drehgeschwindigkeit V_{D} der Erfassungsstelle.

10. Verfahren nach einem der vorhergehenden Ansprüche,
**dadurch gekennzeichnet,**
**dass** der Streifenabstand h größer als die wirksame Fläche der Erfassungsstelle ist.

11. Vorrichtung zur Ermittlung der Rollwinkellage eines Flugkörpers, insbesondere eines Geschosses oder dergleichen unter Einsatz eines Lasersystems zur Erzeugung eines Laserleitstrahls sowie eines optischen Detektors zur Ermittlung der Lage des Flugkörpers und zur Gewinnung eines Korrektursignals, insbesondere zur Durchführung des Verfahrens nach einem der vorhergehenden Verfahrensansprüche,
**dadurch gekennzeichnet,**
**dass** der Laserleitstrahl (4) einen Raumwinkel α bildet,
der Laserleitstrahl (4) über den Raumwinkel α ein festgelegtes Laserstrahlmuster bildet, mit dem der Flugkörper (4) beleuchtbar ist,
ein flugkörperseitiger Detektor (3) vorgesehen ist, der dazu dient, das vom Lasersystem (1) erzeugte Laserlicht zu empfangen und einer flugkörperseitigen Auswerteeinheit zuzuführen,
der Detektor (3) sich zur Rotationsachse X des Flugkörpers (2) seitlich versetzt befindet, sowie
eine Einrichtung zur Ermittlung der Lage des Flugkörpers (2) auf der Grundlage einer am Detektor (3) erfassten, Dopplereffekt-bedingten Frequenzverschiebung vorgesehen ist.

12. Vorrichtung nach Anspruch 11,
**dadurch gekennzeichnet,**
**dass** sich das Laserstrahlmuster mit einer vorgegebenen Frequenz ω₀ über die optische Achse des Leitstrahls (4) bewegt.

13. Vorrichtung nach Anspruch 11 oder 12,
**dadurch gekennzeichnet,**
**dass** das Lasersystem (1) zur Erzeugung von parallelen oder kreisförmigen Streifenmustern Mittel zur Erzeugung einer kohärenten Überlagerung zweier Kugelwellen umfasst.

14. Vorrichtung nach Anspruch 13,
**dadurch gekennzeichnet,**
**dass** ein Teilstrahl zur Erzeugung einer der beiden Kugelwellen in seiner Länge veränderbar ist.

15. Vorrichtung nach Anspruch 13,
**dadurch gekennzeichnet,**
**dass** Mittel zum Überlagern von zwei koaxial zu sendenden Kugelwellen mit verschiedenen Krümmungsradien vorgesehen sind.
